# EUROPEAN PATENT SPECIFICATION

(11) **EP 0 976 795 B1**
(45) Date of publication and mention of the grant of the patent: **18.06.2003**
(21) Application number: 99305877.5
(22) Date of filing: 23.07.1999
(51) Int. Cl.: C09D 5/10, C10M 111/04, C10M 169/04, C10N 30/12, C09D 5/08, C23C 30/00, C23C 28/00

(54) **Antifriction coating for metals and process for its manufacture**
Reibungsvermindernde Beschichtung für Metalle und Verfahren zur deren Herstellung
Revêtement antifriction pour métaux et procédé pour sa fabrication

(30) Priority: 25.07.1998 GB 9816190
(43) Date of publication of application: 02.02.2000
(73) Proprietor: Dow Corning Corporation, Midland, Michigan 48611 (US)
(72) Inventor: Clerici, Vittorio, 65375 Oestrich-Winkel (DE); Heidenfelder, Franz, 65201 Wiesbaden (DE); Mueller, Martin, 71229 Leonberg (DE); Seeler, Harald, 53797 Lohmar (DE); Wilbs, Matthias, 65201 Wiesbaden (DE); Wilhelmi, Alexandra, 55218 Ingleheim (DE)
(74) Representative: Williams, Paul Edwin

(56) References cited:
- US-A- 3 979 351
- US-A- 4 074 011
- US-A- 4 799 959
- DATABASE CHEMABS [Online] CHEMICAL ABSTRACTS SERVICE, COLUMBUS, OHIO, US; NAGAOKA, ATSUSHI: "Adhesives with good storage stability and tracking and soldering resistance for metal-clad laminates" retrieved from STN Database accession no. 125:116971 CA XP002160108 -& JP 08 120246 A (MATSUSHITA ELECTRIC WORKS LTD, JAPAN) 14 May 1996 (1996-05-14)
- DATABASE CHEMABS [Online] CHEMICAL ABSTRACTS SERVICE, COLUMBUS, OHIO, US; MARKOV, E. M. ET AL: "Epoxy resin-phenolic resin composition for protection of electrotechnical devices" retrieved from STN Database accession no. 123:343600 CA XP002160109 -& RU 2 028 349 C (INSTITUT MEKHANIKI METALLOPOLIMERNYKH SISTEM AN BELORUSSII, BELARUS) 9 February 1995 (1995-02-09)

## Description

The present invention relates to an antifriction coating which comprises a lubricant, a corrosion inhibitor, and a solvent.

Antifriction coatings are well known in the art as high performance dry lubricants offering maintenance-free permanent lubrication under working conditions which conventional lubricants (such as mineral-oil and synthetic greases) cannot withstand, for example in terms of load carrying capacity, temperature range, adhesion, fretting corrosion protection, and/or chemical resistance. Antifriction coatings are dispersions of solid lubricants, for example molybdenum disulphide, graphite and polytetrafluoroethylene, in resins and solvents, for example organic solvents and water. They are applied to a substrate as a thin coating (typically 5 to 20µm) forming a dry film on the substrate surface by conventional application techniques, such as spraying, dipping or brushing, followed by heating to evaporate the solvent and cure the coating. Application of antifriction coatings to substrates is often improved by pretreatment of the substrate surface, for example by phosphate coating, fine sandblasting, pickling or anodising. Typical applications for antifriction coatings include dry permanent lubrication of bolts, hinges, lock parts, magnets, running-in aids for engines and gear parts, and applications where limited corrosion protection is required.

The present inventors have found an increasing demand from industry for coatings for metal surfaces which can provide a high level of corrosion protection, cathodic protection, and "for-life" dry lubrication(i.e. the metal surface needs coating only once during its working life) with defined and constant coefficient of friction. Commercially available coatings are unable to satisfy all of these demands.

The present invention provides an antifriction coating which, alone or in combination with other antifriction coatings, can provide high corrosion protection, cathodic protection, and for-life lubrication with defined and constant coefficient of friction.

According to the present invention in a first aspect there is provided an antifriction coating which comprises a lubricant, a corrosion inhibitor, and a solvent, wherein the lubricant comprises a mixture of phenolic resin, epoxy resin, polyvinylbutyral resin, and polyolefin wax, and the corrosion inhibitor comprises aluminium particles, zinc particles and a metal phosphate.

The lubricant used in the antifriction coating of the present invention comprises a mixture of phenolic resin, epoxy resin, polyvinylbutyral resin and polyolefin wax. Preferably, the lubricant comprises 10 to 80% by weight (e.g. 15 to 25% or 65 to 75%) phenolic resin, 15 to 60% by weight (e.g. 18 to 25% or 40 to 50%) epoxy resin, 1 to 25% polyvinylbutyral resin (e.g. 2.5 to 3.5% or 15 to 25%), and 2 to 15% by weight (e.g. 5 to 6% or 12 to 15%) polyolefin wax to a total of 100% by weight. Preferred phenolic resins include copolymer of phenol and formaldehyde and copolymer of phenol, formaldehyde and cresol, a preferred epoxy resin is copolymer of bisphenol A and epichlorohydrin, a preferred polyvinylbutyral resin is polyvinyl acetate polyvinyl alcohol butyral, and a preferred polyolefin wax is micronised polypropylene wax.

The corrosion inhibitor used in the antifriction-coating of the present invention comprises aluminium particles, zinc particles and a metal phosphate. The aluminium particles may be in the form of powder or paste, with aluminium paste being preferred. The zinc particles may be in the form of zinc powder, for example zinc spheres or zinc flake, and may comprises a mixture of zinc spheres and flake (such as in a weight ratio of spheres to flake of from 1.5/1 to 2.5/1, for example 2/1). Preferred metal phosphates are sodium metaphosphate and zinc-aluminium polyphosphate hydrate. The corrosion inhibitor preferably comprises 70 to 85% by weight (e.g. 75 to 82%) of zinc particles, 5 to 15% by weight (e.g. 5-to 10%) of aluminium particles, and 5 to 15% by weight (e.g. 10 to 15%) of metal phosphate to a total of 100% by weight. The particle size of the corrosion inhibitor should be sufficiently small so as to provide an antifriction coating of suitable thickness, for example from 5 to 20µm.

Solvents for use in the antifriction coating of the present invention are well known in the art. Suitable solvents for use in antifriction coatings include water, alcohols (e.g. methanol, ethanol, propanol, butanol), ketones (e.g. acetone, methyl ethyl ketone, methyl butyl ketone, cyclohexanone), esters (e.g. butyl acetate), heterocyclic (e.g. N-methylpyrrolidone) and non-heterocyclic aromatic solvents (e.g. toluene, xylene), including mixtures thereof. Preferred solvents for the antifriction coating according to the present invention are ketones, and a mixture of 25 to 75 % (e.g. 45 to 60%) by weight methyl ethyl ketone, 10 to 50% (e.g. 20 to 30%) by weight methyl isobutyl ketone and 5 to 40 % (e.g. 20 to 25%) by weight cyclohexanone is particularly preferred to a total of 100% by weight.

The antifriction coating of the first aspect of the present invention may also comprise a molecular sieve to prevent gas formation during preparation and/or application thereof.

The antifriction coating of the first aspect of the present invention thus comprises a lubricant, a corrosion inhibitor and a solvent. Preferably, the antifriction coating comprises 40 to 65%, more preferably 45 to 60 %, by weight of corrosion inhibitor, 10 to 25%, more preferably 15 to 20%, by weight of lubricant, and remainder solvent.

The antifriction coating according to the present invention can be prepared by mixing its components together using conventional apparatus, preferably by first blending together the solvent and lubricant and then adding the corrosion inhibitor.

The antifriction coating according to the present invention may be applied to a surface by any conventional application technique, for example brushing, dipping, and spraying (e.g. by aerosol can). Other common application methods include spraying drums, centrifuges, electrostatic or automatic spraying, printing and roller coating. The chosen method of application will depend upon the shape, size, weight and quantity of items to be coated. Preferably, 2, 3 or more coating layers are applied. The coating thickness has a considerable influence on the life, coefficient of friction and anti-corrosion properties of the antifriction coating, and should be greater than the roughness of the surface, typically from 5 to 20µm. Once the surface has been coated with the antifriction coating, it is dried to evaporate the solvent and cure the coating. The antifriction coating according to the present invention can be cured by, for example, heating at 200°C for 20 minutes. The cured antifriction coating preferably comprises 70 to 80% by weight corrosion inhibitor and 20 to 30% by weight lubricant.

The antifriction coating according to the first aspect of the present invention may be used alone or in combination with other commercially available antifriction coatings, including the following preferred commercially available antifriction coatings (percentages by weight):
- Coating A:: 20-25% lubricant - mixture of phenolic, epoxy and vinyl butyral resins, and PTFE.
70-75% solvent - mixture of methyl ethyl ketone, methyl isobutyl ketone, and cyclohexanone.
- Coating B:: 30-35% lubricant - polyamide-imide
resin, molybdenum disulphide and graphite.
65-75% solvent - mixture of N-methylpyrrolidone, xylene, and ethyl benzene.
- Coating C:: 35-45% lubricant - mixture of antimony trioxide, epoxy resin, lead oxide phosphonate and molybdenum disulphide.
55-65% solvent - mixture of toluene, methanol and ethanol.

Particularly preferred combinations of coating layers include:
1) 1, 2 or 3 coating layers of the antifriction coating of the present invention.
2) 1 or 2 coating layers of the antifriction coating of the present invention followed by 2 or 3 coating layers of Coating A, B, or C above.

According to the present invention in a second aspect there is provided a method for coating a substrate with an antifriction coating, which method comprises pretreating a substrate to be coated, and coating the substrate with the antifriction coating according to the first aspect of the present invention.

Substrates are pretreated prior to coating with an antifriction coating to improve adhesion and life of the antifriction coating. Conventional methods of pretreatment include degreasing (for example, using solvents or steam), treatment of corroded surfaces by acid or alkali, phosphating, oxalic acid treatment of stainless steel, sandblasting and anodizing. Phosphating is the preferred pretreatment for iron and steel components prior to coating with the antifriction coating of the present invention. Particularly preferred is a phosphating process which process comprises coating an item to be treated with a solution containing cobalt and/or nickel ions, and preferably also containing stannous ions.

The antifriction coating according to the present invention can thus be used to provide high corrosion resistance, cathodic protection, and for-life lubrication with defined and constant coefficient of friction for articles such as automotive components, for example nuts, bolts and other fasteners, door, bonnet and boot lock parts, hinges, door stoppers, window guides, seat belt components, brake rotors and drums, and other transportation industry related parts.

The present invention will now be illustrated by way of example. All percentages are by weight.

### Example 1

An antifriction coating according to the present invention was prepared by mixing the following materials:
10% phenolic resin
3% copolymer of bisphenol A and epichlorohydrin resin
0.8% micronised polypropylene hydrocarbon wax
0.5% polyvinyl acetate polyvinyl alcohol butyral
29% zinc powder
14% zinc flake
6% sodium metaphosphate
4% aluminium paste
14% methyl ethyl ketone
7% methyl isobutyl ketone
6% cyclohexanone
Remainder - minor amounts of formaldehyde, n-butanol, 2-methyl-1-propanol, phenol, dibutylamine and xylene.

### Example 2 - substrate pretreatment

Steel bolts, 10 mm diameter by 60 mm height, were pretreated by phosphating according to the following process:
The bolts were immersed in a hot alkaline cleaner for 10 minutes at 80°C and then rinsed in hot water at 75°C. The bolts were then pickled in 10% by weight hydrochloric acid by immersion for 10 minutes at room temperature, and rinsed with cold water, followed by immersion in oxalic acid conditioner for 1 minute and further rinsing with cold water. A first phosphating solution was prepared which comprised 23% by weight of phosphoric acid (75%), 8% by weight nitric acid (67%), 9% by weight zinc oxide, 0.2% by weight sodium metaphosphate, and remainder water, and a bath was prepared by diluting 7.5 parts of the first phosphating solution in 92.5 parts water. The bolts were then immersed in the bath containing the first phosphating solution for 20 minutes at a temperature of 75°C and then rinsed with cold water. The bolts were then immersed in a second phosphating solution which comprised 2.0% by weight cobalt acetate, 0.20% surfactant and remainder water, at 75°C for 5 minutes, followed by a cold water rinse, a hot water rinse and drying.

### Example 3 - substrate coating

The pretreated bolts of Example 2 above were coated with antifriction coatings AF1 to AF3 below. Each coating layer was applied by dip spinning in a centrifuge, partial curing for 10 minutes at 200°C, followed by further dip spinning and full cure at 200°C for 20 minutes.
AF1 - 2 coating layers of the antifriction coating of Example 1 alone.
AF2 - 3 coating layers of the antifriction coating of Example 1 alone.
AF3 - 2 coating layers of the antifriction coating of Example 1 followed by 2 coating layers of Coating A described hereinabove.

A comparative antifriction coating (CAF1) was also prepared which consists of 3 coating layers of Coating A described hereinabove.

### Example 4 - corrosion resistance

Salt spray test DIN 50012 was performed on the AF1 to AF3 bolts prepared according to Example 3 above. The results are shown in Tables 1 to 3 below (average results taken from test results for 10 bolts):

**Table 1 -**

| coating AF1 | | | |
|---|---|---|---|
| | | % corrosion | |
| Test | Time (hours) | Thread | Head |
| 1 | 240 | 0.0 | 0.0 |
| | 480 | 3.0 | 1.5 |
| 2 | 240 | 0.0 | 0.0 |
| | 480 | 1.25 | 1.0 |
| 3 | 240 | 0.0 | 1.0 |
| | 480 | 0.2 | 1.4 |
| 4 | 240 | 0.0 | 0.0 |
| | 480 | 1.75 | 0.75 |

**Table 2 -**

| coating AF2 | | | |
|---|---|---|---|
| | | % corrosion | |
| Test | Time (hours) | Thread | Head |
| 1 | 240 | 0.0 | 0.0 |
| | 480 | 0.3 | 0.0 |
| | 720 | 0.3 | 0.0 |
| 2 | 240 | 0.0 | 0.0 |
| | 480 | 0.0 | 0.0 |
| | 720 | 0.0 | 0.1 |
| 3 | 240 | 0.0 | 0.0 |
| | 480 | 0.0 | 0.0 |
| | 720 | 0.6 | 0.0 |
| 4 | 240 | 0.0 | 0.0 |
| | 480 | 0.0 | 0.0 |
| | 720 | 0.6 | 0.2 |

**Table 3 -**

| coating AF3 | | | |
|---|---|---|---|
| | | % corrosion | |
| Test | Time (hours) | Thread | Head |
| 1 | 240 | 0.0 | 0.0 |
| | 480 | 0.6 | 0.0 |
| | 720 | 1.2 | 0.0 |
| 2 | 240 | 3.0 | 0.9 |
| | 480 | 3.4 | 1.3 |
| | 720 | 6.0 | 2.2 |
| 3 | 240 | 0.6 | 0.2 |
| | 480 | 3.8 | 0.6 |
| | 720 | 5.2 | 1.0 |
| 4 | 240 | 0.2 | 0.0 |
| | 480 | 0.4 | 0.2 |
| | 720 | - | - |

### Example 5 - cathodic protection

Cathodic protection test ISO/WD10683 was performed by coating 150mm x 75mm x 1mm steel plates with coatings AF1 to AF3 and CAF1 according to the method described in Example 3 above. The results are shown in Table 4 below:

**Table 4**

| Antifriction coating | % rust after 72 hours |
|---|---|
| AF1 | 0 |
| AF2 | 0 |
| AF3 | 0 |
| CAF1 | 100 |

### Example 6 - lubrication

The coefficient of friction of the AF1 to AF3 bolts prepared according to Example 3 above was determined using an Erichsen AP 541 Bolt Testing Machine. Testing was performed on bolts having been tightened 1 and 3 times and against different surfaces. The results are shown in Table 5 below:

**Table 5**

| Coating | Surface | Tightenings | Coeff. of friction | ± variation |
|---|---|---|---|---|
| None | Steel | 1 | 0.195 | 0.035 |
| AF2 | Steel | 1 | 0.128 | 0.003 |
| AF2 | Steel | 1 | 0.134 | 0.003 |
| AF2 | Painted steel | 1 | 0.134 | 0.010 |
| AF2 | Aluminium | 1 | 0.128 | 0.005 |
| AF3 | Steel | 1 | 0.114 | 0.006 |
| AF3 | Steel | 1 | 0.100 | 0.006 |
| AF3 | Painted steel | 1 | 0.109 | 0.008 |
| AF3 | Aluminium | 1 | 0.104 | 0.002 |
| AF3 | Steel | 3 | 0.114 | 0.009 |
| AF3 | Steel | 3 | 0.108 | 0.013 |
| AF3 | Painted steel | 3 | 0.114 | 0.012 |
| AF3 | Aluminium | 3 | 0.114 | 0.007 |

### Example 7

Further antifriction coatings AF4, AF5 and AF6 according to the present invention were prepared by mixing the following materials in the amounts (percentages by weight) shown in Table 6 below:

**Table 6**

| Material | AF4 | AF5 | AF6 |
|---|---|---|---|
| Phenolic resin¹ | 3.3 | 3.3 | 3.3 |
| Epoxy resin² | 7.0 | 7.0 | 7.0 |
| Polyvinylbutyral resin³ | 3.1 | 3.1 | 3.1 |
| Polyolefin wax⁴ | 2.0 | 2.1 | 2.0 |
| Zinc flake | 42.5 | 32.1 | 42.5 |
| Aluminium pigment | 3.7 | 3.7 | 3.7 |
| Metal phosphate⁵ | 5.7 | 5.7 | 5.7 |
| Talc | - | 4.0 | - |
| Defoamer | 0.002 | 0.002 | 0.002 |
| Molecular sieve | 0.3 | 0.3 | 0.25 |
| Methylethylketone | 14.6 | 18.0 | 17.3 |
| Methylisobutylketone | 5.8 | 7.2 | 6.9 |
| Cyclohexanone | 5.5 | 6.8 | 6.5 |

| | | | |
|---|---|---|---|
| ¹phenol-cresol-formaldehyde copolymer | | | |
| ²copolymer of bisphenol A and epichlorohydrin resin | | | |
| ³polyvinyl acetate polyvinyl alcohol butyral | | | |
| ⁴micronised polypropylene hydrocarbon wax | | | |
| ⁵zinc-aluminium polyphosphate hydrate | | | |

### Example 8 - substrate coating

Steel bolts, 10mm diameter by 60mm height, were pretreated by following the procedure described in Example 2 above, and were coated with two coatings of antifriction coatings AF4 to AF6 above, by following the procedure described in Example 3 above.

### Example 9 - corrosion resistance

Salt spray test DIN 50021 was performed on the AF4 to AF6 bolts prepared as described in Example 8 above for a time of 504 hours. The results are shown in Table 7 below:

**Table 7**

| AF coating | Thickness (µm) | % corrosion (bolt head) |
|---|---|---|
| AF4 | 16.4 | 5.8 |
| AF5 | 17.3 | 5.4 |
| AF6 | 19.0 | 2.2 |

### Example 10 - cathodic protection

Unpretreated iron panels were degreased and coated on one side with each of antifriction coatings AF4 to AF6 using an Erichson spiral film applicator (wet film thickness 50µm). The panels were then dried at 80°C for 5 minutes and the coatings cured for 20 minutes at 200°C. After cooling, the dry thickness of the cured coatings was measured. Corrosion protection tape was then applied to the untreated surfaces of each panel and an X-cut made in the coated surface of each panel. The panels were then each placed in into a salt spray tester (DIN 50021) for 24 hours after which the amount of rust formation was recorded, and the results are given in Table 8 below:

**Table 8**

| AF coating | Thickness (µm) | % rust formation |
|---|---|---|
| AF4 | 3.3 | 0.5 |
| | 3.7 | 1.5 |
| AF5 | 3.3 | 4.5 |
| | 3.8 | 0.5 |
| AF6 | 4.3 | 3.5 |
| | 4.8 | 1.0 |

## Claims

1. An antifriction coating which comprises a lubricant, a corrosion inhibitor, and a solvent, wherein the lubricant comprises a mixture of phenolic resin, epoxy resin, polyvinylbutyral resin and polyolefin wax, and the corrosion inhibitor comprises aluminium particles, zinc particles and a metal phosphate.

2. An antifriction coating according to Claim 1 wherein the lubricant comprises 10 to 80% by weight phenolic resin, 15 to 60% by weight epoxy resin, 1 to 25% polyvinylbutyral resin and 2 to 15% by weight polyolefin wax to a total of 100% by weight.

3. An antifriction coating according to Claim 1 or 2 wherein the corrosion inhibitor comprises 70 to 85% by weight of zinc particles, 5 to 15% by weight of aluminium particles, and 5 to 15% by weight of metal phosphate to a total of 100% by weight.

4. An antifriction coating according to Claim 1, 2 or 3 wherein the solvent comprises a mixture of 25 to 75 % by weight methyl ethyl ketone, 10 to 50% by weight methyl isobutyl ketone and 5 to 40 % by weight cyclohexanone to a total of 100% by weight.

5. An antifriction coating according to any preceding Claim which comprises 40 to 65% by weight of corrosion inhibitor, 10 to 25% by weight of lubricant, and remainder solvent.

6. An antifriction coating which comprises 1, 2 or 3 coating layer(s) of an antifriction coating according to any preceding claim.

7. An antifriction coating which comprises 1 or 2 coating layer(s) of an antifriction coating according to any preceding Claim and a further 2 or 3 coating layers of an antifriction coating selected from antifriction coatings A, B and C, wherein:
Antifriction coating A comprises 20-25% by weight of a lubricant mixture of phenolic resin, epoxy resin, vinyl butyral resin, and polytetrafluoroethylene, and 70-75% by weight of a solvent mixture of methyl ethyl ketone, methyl isobutyl ketone, and cyclohexanone;
Antifriction coating B comprises 30-35% by weight of a lubricant mixture of polyamide-imide resin, molybdenum disulphide.and graphite, and 65-75% by weight of a solvent mixture of N-methylpyrrolidone, xylene, and ethyl benzene, and
Antifriction coating C comprises 35-45% by weight of a lubricant mixture of antimony trioxide, epoxy resin, lead oxide phosphonate and molybdenum disulphide, and 55-65% by weight of a solvent mixture of toluene, methanol and ethanol.

8. A method for coating a substrate with an antifriction coating, which method comprises pretreating a substrate to be coated, and coating the substrate with an antifriction coating according to any preceding Claim, and curing the coating.

9. A method according to Claim 8 wherein the cured coating comprises 70 to 80% by weight corrosion inhibitor and 20 to 30% by weight lubricant.

10. A method according to Claim 8 or 9 wherein the substrate is pretreated by a phosphating process which comprises coating the substrate with a solution containing cobalt and/or nickel ions, and optionally stannous ions.

11. Use of an antifriction coating according to any one of Claims 1 to 7 for coating a substrate, wherein the substrate is selected from nuts, bolts and other fasteners, door, bonnet and boot lock parts, hinges, door stoppers, window guides, seat belt components, brake rotors and drums, and other transportation industry related parts.

## Patentansprüche

1. Reibungsverringernde Beschichtung, die ein Schmiermittel, ein Rostschutzmittel und ein Lösungsmittel enthält, wobei das Schmiermittel eine Mischung aus Phenolharz, Epoxyharz, Polyvinylbutyralharz und Polyolefinwachs enthält und das Rostschutzmittel Aluminiumteilchen, Zinkteilchen und ein Metallphosphat enthält.

2. Reibungsverringernde Beschichtung nach Anspruch 1, worin das Schmiermittel 10 bis 80 Gew% Phenolharz, 15 bis 60 Gew% Epoxyharz, 1 bis 25 Gew% Polyvinylbutyralharz und 2 bis 15 Gew% Polyolefinwachs, zusammen insgesamt 100 Gew%, enthält.

3. Reibungsverringernde Beschichtung nach Anspruch 1 oder 2, worin das Rostschutzmittel 70 bis 85 Gew% Zinkteilchen, 5 bis 15 Gew% Aluminiumteilchen und 5 bis 15 Gew% Metallphosphat, zusammen insgesamt 100 Gew-%, enthält.

4. Reibungsverringernde Beschichtung nach Anspruch 1, 2 oder 3, worin das Lösungsmittel eine Mischung aus 25 bis 75 Gew% Methylethylketon, 10 bis 50 Gew% Methylisobutylketon und 5 bis 40 Gew% Cyclohexanon, zusammen insgesamt 100 Gew%, enthält.

5. Reibungsverringernde Beschichtung nach einem der vorstehenden Ansprüche, die 40 bis 65 Gew% Rostschutzmittel, 10 bis 25 Gew% Schmiermittel und den Rest Lösungsmittel enthält.

6. Reibungsverringernde Beschichtung, die 1, 2 oder 3 Überzugsschichten aus einer reibungsverringernden Beschichtung gemäß einem der vorstehenden Ansprüche enthält.

7. Reibungsverringernde Beschichtung, die 1 oder 2 Überzugsschichten einer reibungsverringernden Beschichtung gemäß einem der vorstehenden Ansprüche und weitere 2 oder 3 Überzugsschichten einer reibungsverringernden Beschichtung, ausgewählt aus reibungsverringernden Beschichtungen A, B und C, enthält, worin:
reibungsverringernde Beschichtung A 20-25 Gew% einer Schmlermittelmischung aus Phenolharz, Epoxyharz, Vinylbutyralharz und Polytetrafluorethylen und 70-75 Gew% einer Lösungsmittelmischung aus Methylethylketon, Methylisobutylketon und Cyclohexanon enthält;
reibungsverringernde Beschichtung B 30-35 Gew% einer Schmiermittelmischung aus Polyamidimidharz, Molybdändisulfid und Graphit und 65-75 Gew% einer Lösungsmittelmischung aus N-Methylpyrrolidon, Xylol und Ethylbenzol enthält und
reibungsverringernde Beschichtung C 35-45 Gew% einer Schmiermittelmischung aus Antimontrioxid, Epoxyharz, Bleioxidphosphonat und Molybdändisulfid und 55-65 Gew% einer Lösungsmittelmischung aus Toluol, Methanol und Ethanol enthält.

8. Verfahren zur Beschichtung eines Substrats mit einer reibungsverringernden Beschichtung, wobei das Verfahren Vorbehandeln eines zu beschichtenden Substrats und Beschichten des Substrats mit einer reibungsverringernden Beschichtung gemäß einem der vorstehenden Ansprüche und Härten der Beschichtung umfasst.

9. Verfahren nach Anspruch 8, worin die gehärtete Beschichtung 70-80 Gew% Rostschutzmittel und 20-30 Gew% Schmiermittel enthält.

10. Verfahren nach Anspruch 8 oder 9, worin das Substrat durch ein Phosphatierungsverfahren vorbehandelt wird, das Beschichten des Substrats mit einer Lösung, die Kobalt- und/oder Nickelionen und optional Zinn-II-Ionen enthält, umfasst.

11. Verwendung einer reibungsverringernden Beschichtung nach einem der Ansprüche 1-7 zur Beschichtung eines Substrats, wobei das Substrat ausgewählt ist aus Schraubenmuttern, Schraubenbolzen und anderen 8efestigungsmitteln, Tür-, Hauben- und Kofferraumverschlussteilen, Scharnieren, Türstoppern, Fensterführungselementen, Sicherheitsgurtkomponenten, Bremsscheiben und -trommeln und anderen verwandten Teilen aus dem Bereich der Beförderungsindustrie.

## Revendications

1. Un revêtement antifrictions qui comprend un lubrifiant, un agent anticorrosion, et un solvant, dans lequel le lubrifiant comprend un mélange de résines phénoliques, de résines époxydes, de résines de butyral polyvinylique et de cire polyoléfine, et où l'agent anticorrosion comprend des particules d'aluminium, des particules de zinc, et un phosphate métallique.

2. Un revêtement antifrictions selon la revendication 1, dans lequel le lubrifiant comprend 10 à 80 % de résines phénoliques en poids, 15 à 60 % de résines époxydes en poids, 1 à 25 % de résine de butyral polyvinylique et 2 à 15 % de cires polyoléfines en poids, pour un total de 100 % en poids.

3. Un revêtement antifrictions selon les revendications 1 ou 2, dans lequel l'agent anticorrosion comprend 70 à 85 % en poids de pellicules de zinc, 5 à 15 % en poids de particules d'aluminium, et 5 à 15 % en poids de phosphate métallique, pour un total de 100 % en poids.

4. Un revêtement antifrictions selon les revendications 1, 2 ou 3, dans lequel le solvant comprend un mélange de 25 à 75 % en poids de méthyl-éthyl-cétone, 10 à 50 % en poids de méthyl-isobutyl-cétone et 5 à 40 % en poids de cyclohexanone, pour un total de 100 % en poids.

5. Un revêtement antifrictions selon une quelconque des revendications précédentes, qui comprend 40 à 65 % en poids d'agent anticorrosion, 10 à 25 % en poids de lubrifiant, et le reste de solvant.

6. Un revêtement antifrictions qui comprend 1, 2 ou 3 couche(s) de revêtement d'un revêtement antifrictions selon une quelconque des revendications précédentes.

7. Un revêtement antifrictions qui comprend 1 ou 2 couche(s) de revêtement d'un revêtement antifrictions selon une quelconque des revendications précédentes, et 2 ou 3 couches de revêtement supplémentaires d'un revêtement antifrictions sélectionné à partir des revêtements antifrictions A, B et C, dans lequel :
Le revêtement antifrictions A comprend 20 à 25 % en poids d'un mélange lubrifiant de résines phénoliques, de résines époxydes, de résines vinyl-butyral, et de polytétrafluoroéthylène, et de 70 à 75 % en poids d'un mélange solvant de méthyléthyl-cétone, méthyl-isobutyl-cétone, et cyclohexanone ;
Le revêtement antifrictions B comprend 30 à 35 % en poids d'un mélange lubrifiant de résines polyamide-imide, de bisulfure de molybdène et de graphite, et 65 à 75 % en poids d'un mélange solvant de N-méthylpyrrolidone, xylène et éthyl-benzène ; et
Le revêtement antifrictions C comprend 35 à 45 % en poids d'un mélange lubrifiant de trioxyde d'antimoine, de résines époxydes, de phosphonate d'oxyde de plomb et de bisulfure de molybdène, et 55 à 65 % en poids d'un mélange solvant de toluène, méthanol et éthanol.

8. Une méthode de revêtement d'un support avec un revêtement antifrictions, cette méthode comprenant le prétraitement du support à couvrir, et le revêtement du support avec un revêtement antifrictions selon l'une quelconque des revendications précédentes, et le durcissement du revêtement.

9. Une méthode selon la revendication 8, dans laquelle le revêtement durci comprend 70 à 80 % en poids d'agent anticorrosion et 20 à 30 % en poids de lubrifiant.

10. Une méthode selon la revendication de 8 ou 9, dans laquelle le support est prétraité par un processus de phosphatage qui comprend le revêtement du support avec une solution contenant des ions cobalt et/ou nickel, et en option des ions étain.

11. L'utilisation d'un revêtement antifrictions selon l'une quelconque des revendications 1 à 7 pour le revêtement d'un support, dans lequel le support est sélectionné parmi les écrous, boulons et autre fixations, pièces de serrures de porte, capot et coffre, charnière, butée de porte, guides de fenêtres, composants de ceinture de sécurité, rotor et tambours de freins, et autres pièces liées à l'industrie des transports.
